# EUROPEAN PATENT SPECIFICATION

(11) **EP 2 651 794 B1**
(45) Date of publication and mention of the grant of the patent: **11.02.2015**
(21) Application number: 11804519.4
(22) Date of filing: 09.12.2011
(51) Int. Cl.: B65G 53/08

(54) **APPARATUS FOR DISCHARGING BULK MATERIAL**
VORRICHTUNG ZUM ENTLADEN VON SCHÜTTGUT
APPAREIL POUR DECHARGER DU MATERIAU EN VRAC

(30) Priority: 16.12.2010 DE 102010054698
(43) Date of publication of application: 23.10.2013
(73) Proprietor: L'Air Liquide Société Anonyme pour l'Etude et l'Exploitation des Procédés Georges Claude, 75007 Paris (FR); Air Liquide Global E&C Solutions Germany GmbH, 60439 Frankfurt am Main (DE)
(72) Inventor: EHRING, Georg, 60439 Frankfurt am Main (DE); MÜLLER-HASKY, Martin, Frankfurt am Main (DE); STEDEN, Christoph, 60439 Frankfurt am Main (DE); CASTILLO-WELTER, Frank, 60388 Frankfurt am Main (DE); WALTER, Dominic, 60439 Frankfurt am Main (DE); SACHS, Horst, 61440 Oberursel (DE); STILLER, Michael, 60439 Frankfurt am Main (DE)
(74) Representative: Kahlhöfer, Hermann
(86) International application number: PCT/EP2011/072314
(87) International publication number: WO 2012/080119

(56) References cited:
- WO-A1-86/02337
- WO-A1-97/09259
- DE-A1- 3 544 298
- DE-A1- 4 420 976
- US-A- 2 793 914
- US-B2- 7 850 904

## Description

### Field of the Invention

This invention relates to an apparatus for discharging bulk material from a container containing process gas, which is under excess pressure. In the sense of this invention, the term container is meant to include any kind of process-technological vessel, such as a reactor or an apparatus. The term excess pressure is meant to express that the container from which the bulk material is discharged is under a pressure higher than the atmospheric pressure or than the pressure of the container into which the bulk material is conveyed.
Furthermore, this invention relates to the use of such apparatus in a process for producing melamine.

### Prior art

For discharging bulk material by retaining a gas flow, double flap valve systems and star feeders are widely used.

As discharging apparatus, single-shaft screw conveyors also have proven successful, whose conveying tube is closed by a weight-loaded movable flap, so that between the conveying screw and the flap the bulk material is compacted to form a plug and in this way forms a gas barrier. Such system is described in GB 1 338 114 and DE 25 07 687.

All these apparatuses have the disadvantage that their barrier effect against emerging gas is more or less imperfect. This is also true for the above-mentioned screw conveyors, as the weight-loaded flap articulated to the upper side of the opening of the conveying tube does not exert a uniform resistance to the bulk material conveyed against the same over the cross-section of the conveying tube, so that it cannot be uniformly compacted and form a granulate plug effective as gas barrier.

A conveying screw with weight-loaded closing flap is also used for example in the so-called BASF process for producing melamine. The fundamentals of this process are described in Ullmann's Encyclopedia of Industrial Chemistry, 6th Edition, Volume 21, pages 209 and 210. In this process, the melamine obtained in the gas phase, the so-called process gas, is crystallized out by mixing the process gas with a sufficiently cold gas stream and separated from the process gas by means of a cyclone separator. The melamine then present as granulate is discharged from the separator, in order to be packed and be processed further. Up to now, this process has been operated at so low pressures that the barrier effect of the discharge screw system was sufficient. In new plants, however, the trend is towards increasing the operating pressure, in order to be able to manage with lower tube conduit and container volumes. From an operating pressure of 2.5 bar in the cyclone separator, the barrier effect of the discharge screw system no longer is sufficient to keep the escape of ammonia present in particular in the process gas within reasonable limits. However, this is of particular importance due to the properties of ammonia harmful to health and the environment.

### Description of the Invention

Therefore, it has been the object of the invention to provide an apparatus for discharging bulk material from a container supplied with process gas and under excess pressure, which apparatus is suitable to avoid the entrainment of gas, better than the known apparatuses. In addition, it has been the object of the invention to provide a process for producing melamine, which can be operated with increased pressure, by avoiding an increased escape of ammonia into the environment when discharging the melamine granulate.

This object is fulfilled by an apparatus according to claim 1, wherein the apparatus substantially consists of a single-shaft screw conveyor and a downstream purge tank, wherein the conveying tube of the screw conveyor opens into the purge tank. A plug shiftably mounted on an axis of symmetry, which has the shape of a cone, subsequently referred to as closing cone, is pressed by a spiral spring with the tip of the cone first, against the flow direction of the bulk material, from the outside into the outlet opening of the conveying tube. The conveying tube of the screw conveyor, the closing cone and the spiral spring are arranged relative to each other such that their axes of symmetry coincide. The purge tank is equipped with ports for the supply and discharge of a purge gas stream and with an outlet opening for the bulk material.

In operation, the bulk material is pressed through the conveying tube against the closing cone by the conveying screw of the screw conveyor. The closing cone moves back and clears a part of the cross-section of the outlet opening of the conveying tube for the exit of the bulk material. In the process, the spiral spring is tensioned and builds up a force against the flow direction of the bulk material, which is transmitted from the closing cone to the bulk material. As a result, the bulk material is compressed in the conveying tube, where it forms a barrier against the inflowing gas from the purge tank.

The advantage of the closing cone lying on the line of symmetry of the conveying tube as compared to the flap known from GB 1 338 114 is that it forms a uniform flow resistance for the bulk material flowing through the conveying tube over the entire cross-section. In this way, a higher compaction of the bulk material can be effected, and hence a higher barrier effect of the bulk material plug against inflowing gas can be achieved. The conical shape prevents the closing cone from laterally breaking out from the axis of symmetry of the conveying tube and supports the central position of the closing cone in the conveying tube. This effect is achieved best when the angle formed by the cone radius and the cone generatrix is equal to or greater than the angle of repose of the bulk material.

The bulk material drops from the opening of the conveying tube into the purge tank, which is provided directly downstream of the screw conveyor. In the lower region of the purge tank, one or more ports are installed for the inlet of purge gas into the container. These ports can be designed as nozzles. The container can have a round, square or rectangular cross-section. The bottom of the container can be formed as cone, as is usual for bulk materials. The inlets for the purge gas should be installed in the container as low as possible, so that the bulk material is purged by gas. When purging of the bulk material should be effected particularly thoroughly, the container bottom and the addition of the purge gas can be designed such that a fluidized bed is formed.

Alternatively, the purge gas inlets can also be installed above the bulk material filling, when purging of the bulk material can be omitted.
In the bottom region of the container, means for loosening the bulk material, for comminuting bulk material lumps, or for eliminating bridge formations can be installed.

The outlet of the bulk material from the purge tank is effected via a gastight discharge system, such as a star feeder.

On the upper surface of the purge tank the outlet for the purge gas laden with the process gas is located, from which it can be supplied to a gas cleaning. The chemical composition of the purge gas depends on the type of bulk material. In many applications, nitrogen or dry air are employed as purge gas.

Preferred Aspects and Exemplary Applications of the Invention

To achieve the desired barrier effect against inflowing process gas by compaction of the bulk material in the conveying tube of the conveying screw and at the same time avoid clogging of the screw conveyor, not only the size of the opening angle of the closing cone, but also the shape of the exit of the conveying tube can be adapted to the properties of the bulk material.

In an advantageous design of the apparatus, the conveying tube is conically tapered towards the exit. In this way, an additional pressing force acting in radial direction is produced on the bulk material plug, and thus its density and barrier effect are increased. To avoid clogging of the exit, the taper angle β should be kept smaller than the angle of repose, so that the bulk material can slip down on the inside of the exit cone.

In a further advantageous aspect of the invention a conical enlargement of the conveying tube towards the exit is provided. This variant is particularly advantageous for bulk material with a great tendency to form lumps, because in this variant the cross-sectional area between conveying tube wall and closing cone constantly increases towards the exit.

In a further advantageous aspect of the invention it is provided to let a conical enlargement follow a conical taper of the conveying tube. This variant is used when radial pressing forces initially are desired, in order to produce a dense bulk material plug, but when the bulk material tends to form lumps, an expanding exit cross-section is required for discharging from the conveying tube.

In a further advantageous aspect of the invention the discharge of the bulk material from the conveying tube is improved, in that cutting plates in the form of a logarithmic spiral are mounted on the closing cone. By means of a relative rotary movement between the bulk material compacted to a plug and the closing cone, the cutting plates cut the bulk material out from the plug. This variant is being used when the bulk material has an extreme tendency to form lumps. The cutting plates extend from the cone center to the outside, but only so far that the closing function is not impeded.

The apparatus according to the invention is particularly suitable for use in processes known per se for producing melamine. In these processes, melamine which initially is present in gaseous form, in a gas mixture, the so-called process gas, with chiefly gaseous ammonia and carbon dioxide, is crystallized out from the gas phase by cooling and is then separated from the process gas in the form of a granulate by means of a cyclone separator. When discharging the granulate from the separator, there is the problem to prevent an outflow of process gas, since it is harmful to health because of its ammonia content. By using the apparatus according to the invention it is possible to limit the amount of process gas escaping into the environment.

Further developments, advantages and possible applications of the invention can also be taken from the following description of exemplary embodiments and the drawings. All features described and/or illustrated form the invention per se or in any combination, independent of their inclusion in the claims or their back-reference.

In the drawings:
- Fig. 1: shows an exemplary design of the discharging apparatus in accordance with the invention;
- Fig. 2: shows an arrangement of the exit opening of the conveying tube and of the closing cone with conically tapered end of the conveying tube in accordance with the invention;
- Fig. 3: shows the closing cone in accordance with the invention, equipped with cutting plates.

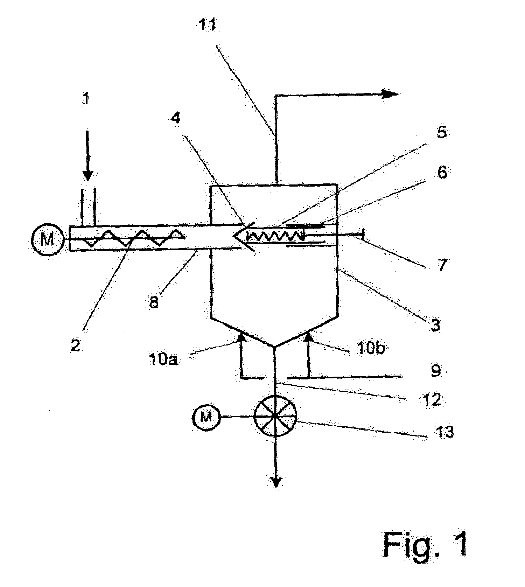

With reference to Fig. 1 the fundamental construction and the mode of function of the discharging apparatus according to the invention will be explained. The bulk material (1) laden with a process gas is supplied from a non-illustrated container, which is under excess pressure, to the screw conveyor (2). Directly downstream of the screw conveyor (2) the purge tank (3) is provided. By the coil spring (5), the closing cone (4) is pressed into the opening of the screw conveyor (2) towards the bulk material and held in position by a fixture (6). By means of a spindle means (7), the tension of the coil spring (5) is adjusted. The bulk material is compacted in the conveying tube (8) of the screw conveyor (2) and thus forms a barrier against inflowing process gas. The purge tank (3) is supplied with a purge gas stream (9). The ports (10a, b) of the purge gas are installed on the bottom surface of the purge tank (3) such that the bulk material is traversed by the purge gas. The purge gas laden with the process gas leaves the purge tank via conduit (11) and is supplied to a non-illustrated gas cleaning. The bulk material is discharged from the purge tank via conduit (12) and the star feeder (13) and supplied to the further treatment.

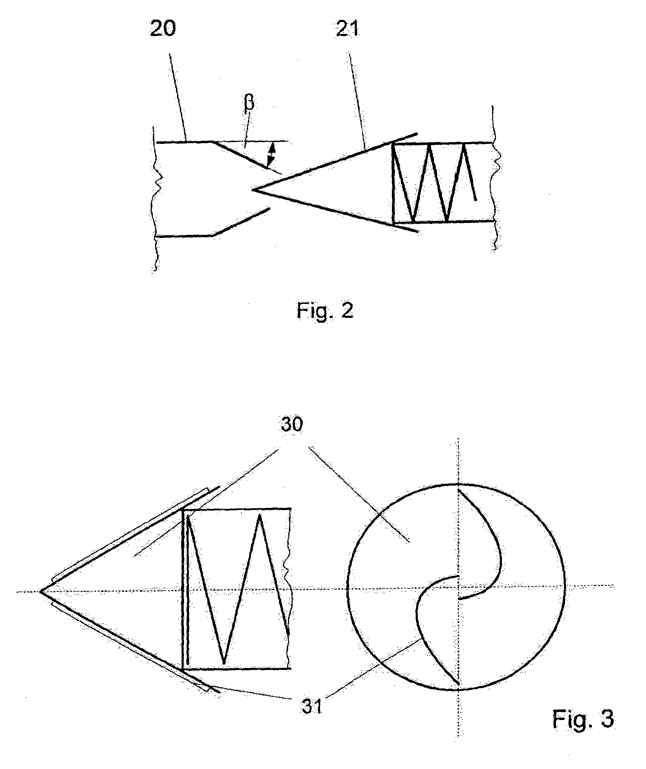

Fig. 2 schematically shows the exit opening of a conveying tube (20), in this case conically tapered, with the taper angle β and the closing cone (21).

Fig. 3 schematically shows a longitudinal section and a front view of a closing cone (30) on which cutting plates (31) in the form of a logarithmic spiral are mounted.

### List of Reference Numerals

- (1): bulk material
- (2): screw conveyor
- (3): purge tank
- (4): closing cone
- (5): coil spring
- (6): fixture
- (7): spindle means
- (8): conveying tube
- (9): purge gas stream
- (10): ports for purge gas stream
- (11): conduit for discharging the laden purge gas stream
- (12): conduit for discharging the bulk material
- (13): star feeder
- (20): conveying tube
- (21): closing cone
- (30): closing cone with cutting plates
- (31): cutting plates

## Claims

1. An apparatus for discharging bulk material from a container containing gas, wherein the apparatus comprises a single-shaft screw conveyor (2) and a downstream purge tank (3), wherein the conveying tube (8) of the screw conveyor opens into the purge tank, wherein a closing cone (4) shiftably mounted on its axis of symmetry is pressed with its cone tip from outside into the outlet opening of the conveying tube, wherein the axes of symmetry of the conveying tube and of the closing cone coincide, and wherein the purge tank is equipped with ports (10) for the supply and discharge of a purge gas stream and with an outlet opening for the bulk material.

2. The apparatus according to claim 1, wherein the end of the conveying tube is conically tapered.

3. The apparatus according to any of the preceding claims, wherein the end of the conveying tube is conically enlarged.

4. The apparatus according to any of the preceding claims, wherein a conical enlargement follows a conical taper of the conveying tube.

5. The apparatus according to any of the preceding claims, wherein cutting plates in the form of a logarithmic spiral are mounted on the closing cone.

6. The apparatus according to claim 1, wherein the angle formed by cone radius and cone generatrix is equal to or greater than the angle of repose of the bulk material.

7. Use of an apparatus according to any of the preceding claims in a process for producing melamine.

## Patentansprüche

1. Vorrichtung zum Entladen von Schüttgut aus einem Behälter, der Gas enthält, wobei die Vorrichtung einen Einwellen-Schneckenförderer (2) und einen stromabwärtigen Spültank (3) umfasst, wobei die Förderleitung (8) des Schneckenförderers in den Spültank öffnet, wobei ein Verschlusskegel (4), der verschiebbar auf seiner Symmetrieachse angeordnet ist, mit seiner Kegelspitze von außen in die Auslassöffnung der Förderleitung gepresst wird, wobei die Symmetrieachsen der Förderleitung und des Verschlusskegels miteinander übereinstimmen und wobei der Spültank mit Öffnungen (10) für die Zufuhr und Entladung einer Spülgasströmung und mit einer Auslassöffnung für das Schüttgut ausgestattet ist.

2. Vorrichtung nach Anspruch 1, wobei sich das Ende der Förderleitung konisch verjüngt.

3. Vorrichtung nach einem der vorhergehenden Ansprüche, wobei das Ende der Förderleitung konisch erweitert ist.

4. Vorrichtung nach einem der vorhergehenden Ansprüche, wobei eine konische Erweiterung einer konischen Verjüngung der Förderleitung folgt.

5. Vorrichtung nach einem der vorhergehenden Ansprüche, wobei Schneidplatten in Form einer logarithmischen Spirale am sich schließenden Kegel befestigt sind.

6. Vorrichtung nach Anspruch 1, wobei der von dem Kegelradius und der Kegelmantellinie gebildete Winkel gleich oder größer als der Schüttwinkel des Schüttgutes ist.

7. Verwendung einer Vorrichtung nach einem der vorhergehenden Ansprüche in einem Verfahren zur Herstellung von Melamin.

## Revendications

1. Appareil pour décharger un matériau en vrac d'un conteneur contenant du gaz, l'appareil comprenant un convoyeur à vis à arbre unique (2) et un réservoir de purge en aval (3), le tube de convoyage (8) du convoyeur à vis débouchant dans le réservoir de purge, un cône de fermeture (4) monté de manière déplaçable sur son axe de symétrie étant pressé avec sa pointe de cône depuis l'extérieur dans l'ouverture de sortie du tube de convoyage, les axes de symétrie du tube de convoyage et du cône de fermeture coïncidant, et le réservoir de purge étant équipé d'orifices (10) pour l'alimentation et la décharge d'un flux de gaz de purge et d'une ouverture de sortie pour le matériau en vrac.

2. Appareil selon la revendication 1, dans lequel l'extrémité du tube de convoyage est amincie sous forme conique.

3. Appareil selon l'une quelconque des revendications précédentes, dans lequel l'extrémité du tube de convoyage est élargie sous forme conique.

4. Appareil selon l'une quelconque des revendications précédentes, dans lequel un élargissement conique suit un amincissement conique du tube de convoyage.

5. Appareil selon l'une quelconque des revendications précédentes, dans lequel des plaques de coupe en forme de spirale logarithmique sont montées sur le cône de fermeture.

6. Appareil selon la revendication 1, dans lequel l'angle formé par le rayon du cône et la génératrice du cône est supérieur ou égal à l'angle de repos du matériau en vrac.

7. Utilisation d'un appareil selon l'une quelconque des revendications précédentes, dans un processus de production de mélamine.
